# EUROPÄISCHE PATENTSCHRIFT

(11) **EP 1 389 413 B1**
(45) Veröffentlichungstag und Bekanntmachung des Hinweises auf die Patenterteilung: **21.03.2012**
(21) Anmeldenummer: 03015139.3
(22) Anmeldetag: 04.07.2003
(51) Int. Cl.: A01D 34/66, A01D 57/20

(54) **Anlenkung eines Seitenmähwerks und seiner Zusatzeinrichtung an ein Tragwerk zur Ankopplung an einen Traktor oder an ein Trägerfahrzeug**
Coupling of a lateral mowing unit and its complementary means to a supporting structure for attachment to a tractor or a carrying vehicle
Articulation d'une tondeuse latérale et ses dispositifs auxiliaires avec une structure de support pour la fixation sur un tracteur ou un véhicule porteur

(30) Priorität: 30.07.2002 DE 10234741
(43) Veröffentlichungstag der Anmeldung: 18.02.2004
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A- 0 808 556
- EP-A- 0 882 386
- EP-A- 1 106 051
- EP-A- 1 111 985

## Beschreibung

Die Erfindung betrifft die Anlenkung eines Seitenmähwerks und seiner Zusatzeinrichtungen an ein Tragwerk zur Ankopplung an einen Traktor oder an ein selbstfahrendes Mähwerk gemäß dem gattungsbildenden Oberbegriff des Anspruchs 1.

Mit zunehmenden Arbeitsbreiten von pick up - Aufnahmeeinrichtungen für Häcksler Pressen und Ladewagen besteht ein zunehmender Bedarf an Großschwaden, um damit die Arbeitsbreiten von pick up - Aufnahmeeinrichtungen, und damit insbesondere die Leistungsfähigkeit von Häckelern optimal nutzen zu können. Dadurch nehmen auch die Arbeitsbreiten der Mähwerke entsprechend zu. Dieses gilt auch für deren Zusatzeinrichtungen, wie beispielsweise Aufbereiter oder Querfördereinrichtungen.

Der Forderung der Bildung von Großschwaden kommen Mähwerke insofern nach, indem Sie über Querfördereinrichtungen verfügen, die in der Lage sind, die Mahd quer zur Fahrtrichtung zu versetzen, wobei mehrere Mahden zu einem Großschwad zusammengelegt werden können. Häufig sind derartige Mähwerke zusätzlich mit einem Aufbereiter ausgestattet, die beispielsweise als Knickzetter oder als Walzenconditionierer mit Quetschwirkung ausgebildet sind.

Insbesondere Seltenmähwerke, die mit derartigen Aufbereitern und Querfördereinrichtungen ausgestattet sind, sind mit einem Ausleger mit dem Tragwerk des Trägerfahrzeugs verbunden, wobei der Ausleger dann den Mähbalken einschließlich des Aufbereiters und die Querfördereinrichtung tragen muss. Insbesondere beim Ausheben im Vorgewende, aber auch in der Transportstellung entstehen dabei aufgrund außermittiger Lastverteilung in Bezug auf den Ausleger hohe Torsionsmomente, die den Ausleger durch hohe Torsionsspannungen belasten, die sich zusätzlich dem Spannungszustand überlagern, die durch Biegung Zug und Druck entstehen.

Allein schon aus verformungstechnischen Gründen müssen entsprechend große Profilquerschnitte bei derartigen Auslegern vorgesehen werden, um eine hinreichende Formsteifigkeit zu erzielen, welche den Mähwerken ein hohes Eigengewicht verleiht. Entsprechend robust und großvolumig müssen die Krafteinleitungspunkte am Mähwerk selbst aber auch an dem Tragwerk, an dem ein Ausleger angelenkt wird, ausgebildet werden. All dieses führt zu hohen Gewichtsbefastungen am Mähwerk selber, am Tragwerk des Trägerfahrzeugs, am Dreipunktgestänge der Dreipunkthydraulik und es erhöht auch die Achsbelastungen des Trägerfahrzeugs und belastet entsprechend die Fahrbahndecken öffentlicher Strassen und Wege.

Dabei entstehen zusätzliche Nachteile, wie etwa die hohe Gewichtskraft, die auf dem Mähwerk lastet, und die durch entsprechend ausgelegte Federn oder Federpakete abgefangen und auf den Rädern des Trägerfahrzeugs abgestützt werden müssen. Ein weiterer Nachteil ist dabei die große Massenträghelt derartiger Mähwerke mit diesen Zusatzeinrichtungen, die einer dynamischen und schnellen Bodenanpassung beim Kopieren des Geländes hinderlich sind. Diesen Mangel will die Erfindung beseitigen.

Aus der EP 1 106 051 A1 ist ein gezogenes Seitenmähwerk mit Tragwerk bekannt, wobei ein erster Ausleger Mähwerkzeuge und Aufbereiter trägt und dabei über horizontale Achsen mit dem Tragwerk verbunden ist. Ein weiterer Ausleger tragt die Fördereinrichtung.

Aufgabe der Erfindung ist es daher, durch die konstruktive Ausgestaltung der Anlenkung derartiger Seitenmähwerke und derartiger Zusatzeinrichtungen, wie Aufbereiter oder Querfördereinrichtungen, das Seitenmähwerk gewichtsmäßig zu entlasten, wobei gleichzeitig die Flexibilität, was den Einsatz der Seitenmähwerke mit oder ohne Zusatzgeräte anbetrifft, wesentlich erhöht werden soll. Die Summe dieser Maßnahmen soll dabei zusätzlich helfen, den wirtschaftlichen Einsatz derartiger Mähwerke wesentlich zu verbessern.

Gelöst wird die Aufgabe der Erfindung mit den kennzeichnenden Merkmalen des unabhängigen Hauptanspruchs. Weitere vorteilhafte Ausgestaltungen der Erfindung sind den abhängigen Ansprüchen, der Beschreibung und den Figurendarstellungen zu entnehmen.

Ein Seitenmähwerk nach der Erfindung beinhaltet die an sich bekannten Baueinheiten, die im Wesentlichen aus einem Kreiselmähwerk, einer Überkopffördereinrichtung, die beispielsweise als Knickzetter ausgebildet sein kann, und einer nachgeordneten Querfördereinrichtung, die beispielsweise als Förderband ausgebildet sein kann, wobei aber erfindungsgemäß mindestens zwei dieser Baueinheiten mittels eigener, d.h. voneinander unabhängiger Ausleger, welche an das Tragwerk angelenkt sind, in Ihrer Arbeitsstellung längs der Fahrtrichtung durch um fahrtrichtungsparallele Achsen ausführbare Schwenk- oder Drehbewegungen bodenanpassungsfähig seitlich eines Traktors oder Trägerfahrzeugs geführt werden.

An dem in Fahrtrichtung ersten Ausleger ist an dessen freien Ende der Mähbalken mit oder ohne Aufbereiter angelenkt.

An dem zweiten Ausleger kann beispielsweise ein Aufbereiter angelenkt sein und an einem dritten Ausleger eine Querfördereinrichtung.

Ein besonderer Vorteil dieser Art der Anhängung besteht darin, dass der eigentliche Mähbalken von den zusätzlichen Massen, wie die eines Aufbereiters oder Förderbandes gewichtsmäßig befreit ist, so dass er mit einer geringen Federkraftentlastung und somit besonders einfach mit geringen Aufstandskräften über dem Boden zu führen ist. Diese gewichtsentlastende Bauweise ermöglicht zusätzlich eine besonders dynamische und gute Bodenanpassungsfähigkeit.

An dem zweiten oder dritten Ausleger, der dem ersten Ausleger in Bezug auf die Fahrtrichtung nachgelagert Ist, befindet sich eine Fördereinrichtung, beilspielsweise ein Förderband, welches dazu dient, die Mahd quer zur Fahrtrichtung entweder nach innen oder außen zu fördern und dort in einem Schwad abzulegen. Dabei wird die Mahd von dem Aufbereiter, der die Mahd ohnehin erfasst und entgegen der Fahrtrichtung beschleunigt und fördert, an die Fördereinrichtung übergeben.

Der zweite Ausleger ist ebenfalls um eine fahrtrichtungsparallele Achse schwenkbar mit dem Tragwerk verbunden, wobei diese fahrtrichtungsparallele Achse des zweiten Auslegers identisch ist mit der des ersten Auslegers, welches bedeutet, dass diese Achsen auf einer gemeinsamen Geraden liegen.

Am freien Ende des zweiten Auslegers befindet sich ebenfalls um fahrtrichtungsparallele Achsen drehbar gelagert die Fördereinrichtung, wobei auch diese Achse in besonders vorteilhafter Weise mit der Drehachse des Mähbalkens des ersten Auslegers identisch ist, so dass der Mähbalken samt Aufbereiter und die Fördereinrichtung während des Mähvorgangs und bei der Anpassung an des Bodenrelief synchron gleiche Bewegungen durchführen können.

In besonders vorteilhafter Weise sind beide Ausleger auch um vertikale Achsen entgegen der Fahrtrichtung dann verschwenkbar, wenn das Seitenmähwerk auf ein Hindernis trifft. Dazu sind die Ausleger in Gelenken mit vertikaler Schwenkachse an das Tragwerk angeschlagen, so dass die Ausleger abgestützt um diese Schwenkachse durch eine als Überlastsicherung ausgebildete Drehmomentenstütze, für den Fall des Austreffens auf ein Hindernis, rückwärtig ausweichen können.

In einer weiteren vorteilhaften Ausgestaltung der Erfindung kann die Fördereinrichtung auch durch einen separaten Stellantrieb für den zweiten Ausleger unabhängig vom ersten Ausleger nach oben, oder auch gleichzeitig nach oben und nach hinten verschwenkt werden, so dass die Fördereinrichtung mit dem Mäh - und Aufbereitungsprozess außer Eingriff steht. Der gleiche Stellantrieb ist auch dazu geeignet, die Fördereinrichtung gemeinsam mit dem Mähbalken in eine Transportposition zu verklappen.

Analog kann diese Art der Anlenkung auch für einen Aufbereiter, der somit gleichzeitig vom eigentlichen Mähwerk entkoppelt ist, angewendet werden.

In einer weiteren vorteilhaften Ausgestaltung der Erfindung kann die gesamte Zusatzeinrichtung, wie die einer Fördereinrichtung oder eines Aufbereiters, durch eine entsprechend ausgestaltete Kupplungseinrichtung schließlich völlig von dem Seitenmähwerk abgekoppelt werden, so dass das Seitenmähwerk völlig losgelöst von der Fördereinrichtung und Aufbereiter auch ohne diese verwendet werden kann. Letzteres ist besonders dann von Vorteil, wenn ein derartiges Mähwerk mit Traktoren der geringeren Leistungsklasse eingesetzt werden soll.

Anhand des nachfolgend dargelegten Ausführungsbeispiels soll die Erfindung im einzelnen am Beispiel eines Kreiselmähwerks mit integriertem Aufbereiter in Verbindung mit einem Förderband als Querfördereinrichtung zur Bildung eines Großschwads näher dargelegt und erläutert werden:
- Fig. 1: zeigt eine Mähwerkskombination in einer Draufsicht bestehend aus einem Traktor mit angebautem Frontmähwerk mit einem Doppel-Seitenmähwerk mit Querfördereinrichtung in einer Arbeitsstellung zur Bildung eines Großschwads
- Fig. 1a: zeigt einen vergrößerten Ausschnitt aus Fig. 1 des Traggestells von oben in einer Draufsicht mit einer Koppelstange als Koppelglied
- Fig. 1b: zeigt einen vergrößerten Ausschnitt aus Fig. 1 des Traggestells von oben in einer Draufsicht mit einem Hydraulikzylinder als Koppelglied in der Arbeitsstellung
- Fig. 1c: zeigt einen vergrößerten Ausschnitt aus Fig. 1 des Traggestells von oben in einer Draufsicht mit einem ausgefahrenen Hydraulikzylinder als Koppelglied mit einer verschwenkten Stellung des zweiten Auslegers
- Fig. 2: zeigt eine Mähwerkskombination in einer Draufsicht bestehend aus einem Traktor mit angebautem Frontmähwerk und einem Doppel-Seitenmähwerk mit hochgeklappter Querfördereinrichtung in einer Arbeitsstellung zur Bildung von drei Einzelschwaden
- Fig. 3: zeigt eine Mähwerkskombination in einer Draufsicht bestehend aus einem Traktor mit angebautem Frontmähwerk mit einem Doppel-Seitenmähwerk mit Querfördereinrichtung in einer Arbeitsstellung nach dem Ansprechen der Anfahrsicherung
- Fig. 4: zeigt einen vergrößerten Ausschnitt aus Fig. 3
- Fig. 5: zeigt ein Doppel-Heckmähwerk gemäß Fig.1 in einer Draufsicht mit abgekoppelter Querfördereinrichtung in einer Arbeitsstellung.
- Fig. 6: zeigt eine abgekoppelte Querfördereinrichtung gemäß Fig.1 in einer Draufsicht in einer Arbeitsstellung.
- Fig. 7: zeigt eine Mähwerkskombination in einer Draufsicht bestehend aus einem Traktor mit angebautem Frontmähwerk mit einem Doppel-Seitenmähwerk mit Querfördereinrichtung in einer Transportstellung mit hochgeklappten Seitenmähwerken und hochgeklappten Fordereinrichtungen

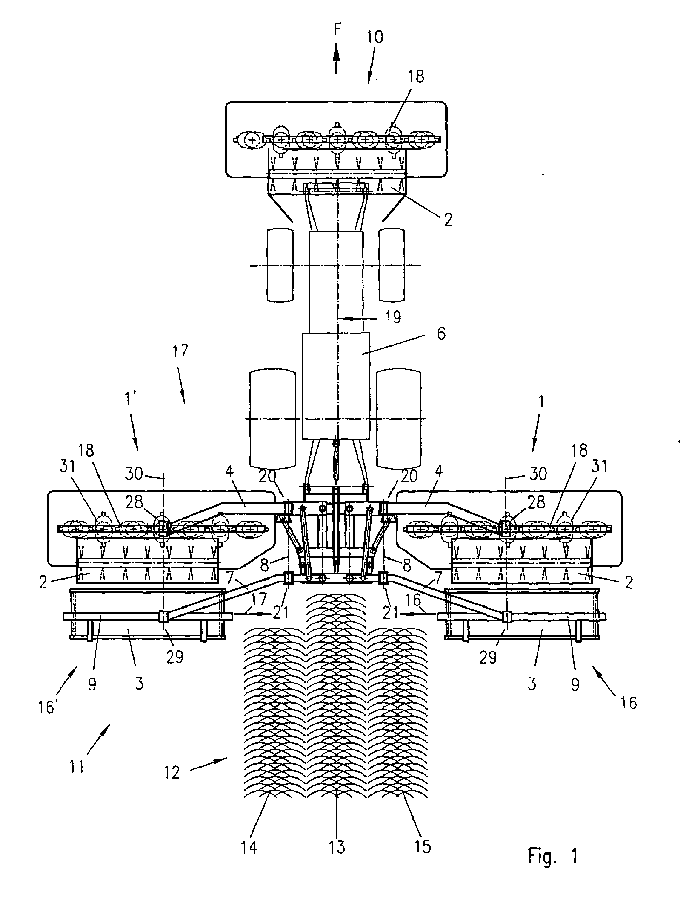

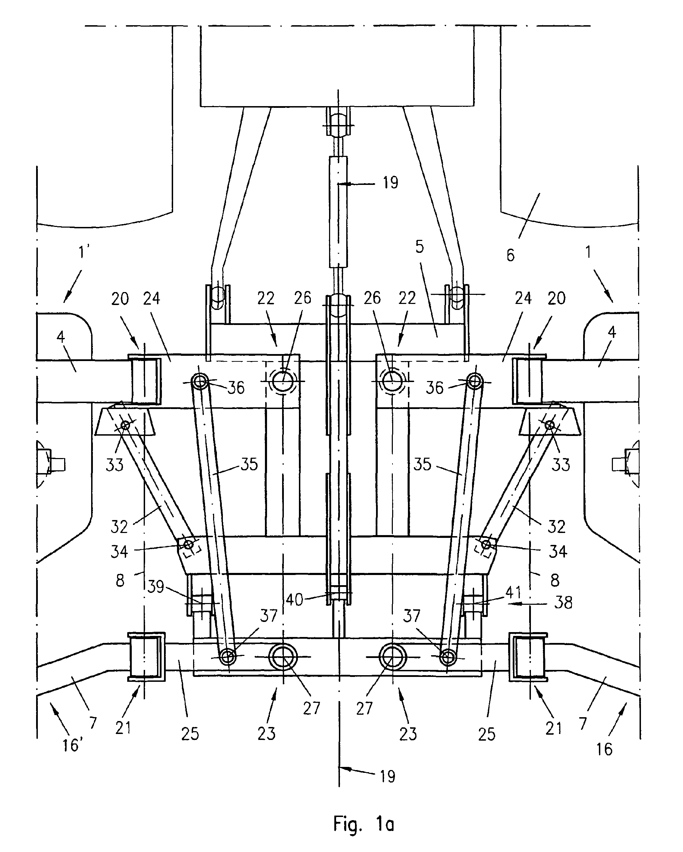

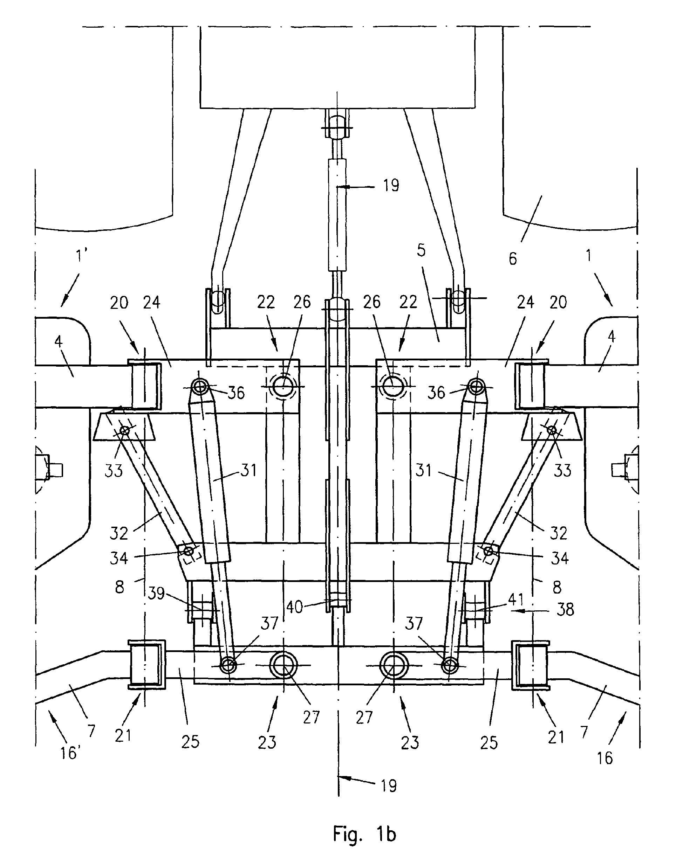

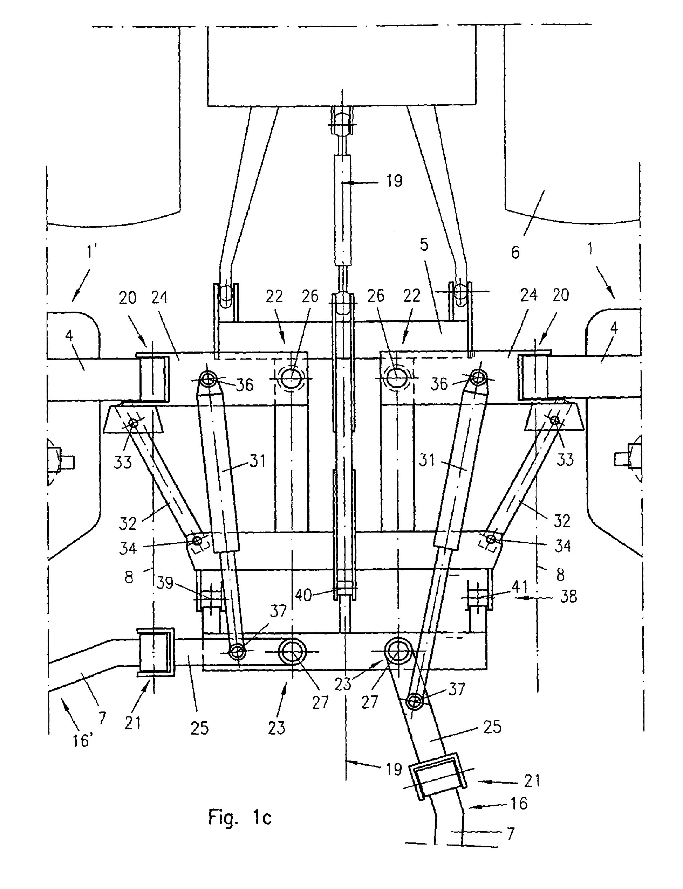

In Fig.1 ist eine an einem Traktor angebaute Mähwerkskombination in einer Draufsicht in einer Arbeitsstellung dargestellt. Diese besteht im wesentlichen aus einem Traktor 6 mit angebautem Frontmähwerk 10 mit integriertem Aufbereiter 2, einem Doppel-Seitenmähwerk 17 bestehend aus zwei Seitenmähwerken 1 und 1' ebenfalls mit integriertem Aufbereitern 2. Sowohl das Frontmähwerk 10 als auch die Seitenmähwerke 1,1' sind als Scheibenmäher mit Mähbalken 18 und den um lotrechte Achsen umlaufend angetriebenen mit Mähklingen besetzten Mähscheiben dargestellt.

Die Aufbereiter 2 in den Seitenmähern übernehmen gleichzeitig die Funktion der Überkopfförderer, mit denen die Mahd auf die Fördereinrichtung 16,16' als Teil der Querfördereinrichtung 11 übergeben wird.

Jedem der Mähwerke 1,1',10 ist ein Aufbereiter 2, ausgebildet als Knickzetter mit quer zur Fahrtrichtung F ausgerichteter, waagerecht liegender, angetriebener mit V-Zinken besetzter Welle zugeordnet.

Weiterhin ist jedem der beiden Seitenmähwerke 1 bzw. 1' ein Querförderband 3 bzw. 3' mit der Bandförderrichtung 16 bzw. 17 zugeordnet. Dabei haben die Querförderbänder 3,3' die Funktion, die Mahd der Seitenmähwerke 1,1' mit ihren angetriebenen Förderbändern und ihrer Bandförderrichtung 16 bzw. 17 auf die Längsmittelebene 19 zuzufördern, so dass sich insgesamt ein Großschwad 12, bestehend aus den drei Einzelschwaden 13,14,15 des Front- 10 und der beiden Seitenmähwerke 1,1' etwa in der Linie der Längsmittelebene 19 bildet. Die Seitenmähwerke 1,1' einschließlich der Querförderbänder 3,3' sind spiegelsymmetrisch zur Längsmittelebene 19 des Traktors 6 ausgebildet. Die Antriebselemente und deren Antriebsstränge sind aus Gründen der Übersichtlichkeit nicht mit dargestellt worden.

Beide Seitenmähwerke 1,1' und beide Querförderbänder 3,3' sind mittels Auslegern 4 bzw. 7 an einem Tragwerk 5 angeschlagen, wobei das Tragwerk 5 mit den Anschlagpunkten der Dreipunkthydraulik des Traktors 6 verbunden ist.

Zwischen den Auslegern 4 bzw. 7 und dem Tragwerk 5 befinden sich als Verbindungsglieder die Gelenkverbindungsstücke 24 bzw. 25, die tragwerksseitig um überwiegend vertikale Gelenkachsen 26 bzw. 27 in den Gelenkpunkten 22 bzw. 23 mit dem Tragwerk 5, und am gegenüberliegenden äußeren Ende in den Gelenkverbindungen 20 bzw. 21 um die in Fahrtrichtung verlaufende überwiegend horizontale Gelenkachse 8, mit den Auslegern 4 bzw. 7 schwenkbar verbunden sind.

Somit sind die Ausleger 4 bzw. 7, und damit die Seitenmähwerke 1,1' innenseitig, d.h. der Längsmittelebene 19 zugewandt, in den Gelenkverbindungen 20 bzw. 21 mit den Gelenkverbindungsstücken 24 bzw. 25 gelenkig um die horizontale Gelenkachse 8, und außenseitig an ihren freien Enden in den Gelenkverbindungen 28 bzw. 29 um die in Fahrtrichtung verlaufende überwiegend horizontale Gelenkachse 30, mit den Mähbalken 31 bzw. mit dem Querförderband 3,3' schwenkbar verbunden.

Die Gelenkverbindung 29 ist dabei Teil eines Portalrahmens 9. welcher das jeweilige Querförderband 3,3' so übergreift, dass der Gutstrom ungehindert unterhalb des Portalrahmens hindurchfließen kann.

In der Arbeitsstellung der Mähwerkskombination, wie in Fig. 1 dargestellt, liegen die Gelenkachsen 8 der Gelenke 20 und 21 idealerweise auf einer gemeinsamen Geraden. Dieses gilt auch für die Gelenkachsen 30 der Gelenke 28 und 29. Dabei verlaufen die Gelenkachsen 8 und die Gelenkachsen 30 idealerweise parallel zueinander.

Dabei stützen sich die Querförderbänder 3,3' jeweils auf den ihnen in Fahrtrichtung vorgelagerten Mähwerken 1 bzw. 1' so ab, dass diese, bedingt durch Rollbewegungen der Bodenanpassung der Mähbalken 31 der Mähwerke 1,1', diesen ebenfalls folgen können. Da beide Ausleger 4 und 7 jeweils um die gleichen Gelenkachsen 8 bzw. 30 momentan drehen können, können sie synchron ohne Zwängungen gleich Höhen- und Rollbewegungen, dem Bodenrelief folgend, ausführen. Durch die eigenständige Anlenkung des Mähwerks 1,1' mit dem Ausleger 4 und durch die eigenständige Anlenkung des Querförderbandes 3,3' mit dem Ausleger 7 an das Tragwerk 5, wird insbesondere der Ausleger 4 erheblich geringer auf Torsion belastet, da das Querförderband 3,3' weit hinter dem Ausleger 4 liegt, welches durch den außermittigen Lastangriff ein erhebliches Torsionsmoment auf den Ausleger 4 ausüben würde, wenn dieses allein von dem Ausleger 4 aufgenommen werden müsste.

Damit die Seitenmähwerke 1.1' und die Förderbänder 3,3' in Ihrer Arbeitsposition gehalten werden, müssen sie in dieser Position gegen unbeabsichtigtes Verschwenken um die vertikalen Gelenkachsen 26 bzw. 27 der Gelenkverbindung 22 bzw. 23 gegenüber dem Tragwerk 5 durch eine Drehmomentenstütze 32 abgestützt werden.

Diese Funktion übernimmt zum einen die Drehmomentenstütze 32, ausgebildet in dem Ausführungsbeispiel als Druckstrebe, die in den Gelenkpunkten als Widerlagern 33 und 34 angeschlagen und am Traggestell 5 abgestützt ist, und zum anderen die Koppelstange 35, die in den Gelenkpunkten 36 und 37 angeschlagen ist. Dabei sind die Gelenkpunkte 36 bzw. 37 jeweils Teil der Gelenkverbindungsstücke 24 bzw. 25.

In einer besonders vorteilhaften Ausgestaltung der Erfindung kann die Drehmomentenstütze 32 in bekannter Weise als Anfahrsicherung und Überlastsicherung ausgebildet sein. Dadurch sind die Ausleger 4 und 7 in Ihrer Arbeitstellung gegenüber dem Tragwerk fixiert, solange die Überlastsicherung als Anfahrsicherung nicht anspricht.

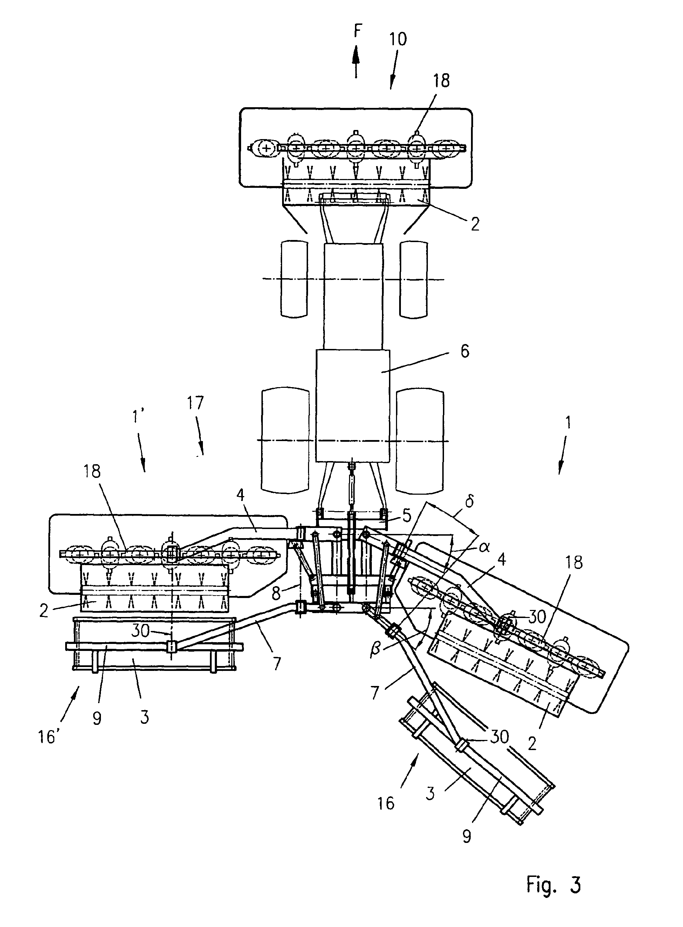

Derartige Überlastsicherungen können beispielsweise durch federvorgespannte Schnappriegelverbindungen, oder beispielsweise auch durch einen doppeltwirkenden Hydraulikzylinder, dessen Kolben durch ein Druckbegrenzungsventil eingespannt ist, realisiert werden. Gemeinsam sind derartigen Lösungsformen von Druckstreben mit integrierter Überlastsicherung als Anfahrsicherung, dass sie bei einer definierten Überlast ansprechen und eine Abstandveränderung der Krafteinleitungspunkte in den Widerlagern zwischen der Druckstrebe und dem Tragwerk 5 zulassen und ermöglichen. Eine derartige Situation einer angesprochenen Überlastsicherung ist in Fig. 3 dargestellt. Dabei ist aus Gründen der Übersichtlichkeit auf eine explizite Darstellung der Ausgestaltung der Überlastsicherung verzichtet worden.

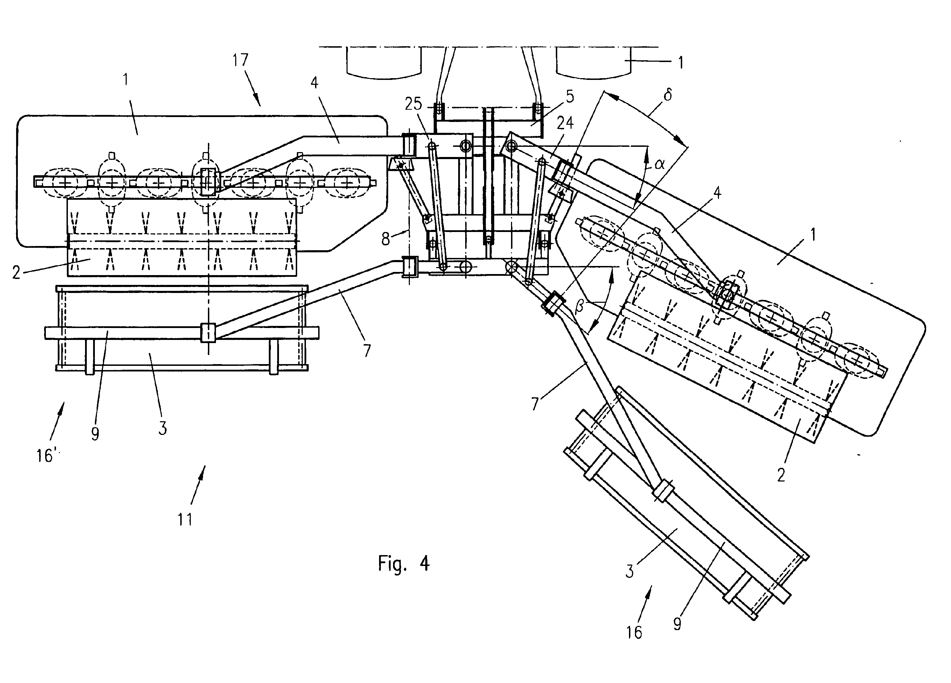

Das Seitenmähwerk 1 ist nach Ansprache der Überlastsicherung rückwärtig um die vertikale Schwenkachse 26 der Gelenkverbindung 22 ausgeschwenkt. Fig. 4 verdeutlicht diese Situation in einem vergrößerten Maßstab als Teilausschnitt der Fig. 3. Durch das Ansprechen der Überlastsicherung hat das Seitenmähwerk 1 eine Verschwenkung um den Winkel α erfahren. Die Folge ist eine Verringerung des Abstands der Widerlager der Drehmomentenstütze 32, wobei die Widerlager als Gelenkpunkte mit vertikalen Drehachsen ausgebildet sind.

Im Falle des Ansprechens einer Überlastsicherung und in dessen Folge des rückwärtigen Verschwenkens eines Seitenmähwerks 1 oder 1' wechselt momentan der Belastungsfall für die Koppelstange 35, indem diese dann zur Druckstrebe wird.

Da nun die Gelenkverbindungsstücke 24 und 25 durch die Koppelstange 35 untereinander gelenkig gekoppelt sind, wobei die Gelenkpunkte 26,27,36,37 ein Gelenkviereck bilden, welches eine Lenkerkopplung zwischen dem Ausleger 4 eines Mähwerks 1,1' und dem Ausleger 7 eines Förderbandes 3,3' darstellt, verschwenkt im Falle des Ausschwenkens des Mähwerks 1,1' um den Winkel α gleichermaßen das Förderband 3,3' um seine jeweilige vertikale Schwenkachse 27 der Gelenkverbindung 23 um den Winkel β. Dabei ist die Anlenkung der Koppelstange 35 in den Gelenkpunkten 36,37 so gewählt, dass die horizontalen Schwenkachsen der Gelenkverbindungen 20,21, die in der Arbeitsstellung eine gemeinsame Schwenkachse 8 bilden, nunmehr um den Winkel δ derart divergieren, dass das Förderband 3,3' in seiner Schwenkbewegung dem Mähwerk 1,1' in rückwärtiger Richtung während des Schwenkens voreilt. Dadurch ist sichergestellt, dass die Fördereinrichtung (16,16') in Falle des Ansprechens der Anfahrsicherung um einen Schwenkwinkel (β) ausweichen kann, dessen Betrag schneller als der Betrag des Schwenkwinkel (α) ansteigt. Dieses verhindert Beschädigungen durch kontaktierende Relativverschiebungen zwischen dem Mähwerk 1,1' mit dessen Aufbereiter 2 und dem Förderband 3,3'.

In Fig. 1b ist als Alternative zur Koppelstange 35 in Anlehnung an Fig.1a ein doppelwirkender Hydraulikzylinder 31 als Koppelglied dargestellt, der im gesperrten Zustand die gleiche Funktion, wie die Koppelstange erfüllt. Ein besonderer Vorteil der Erfindung besteht aber darin, dass, wie in Fig. 1c dargestellt, mit diesem doppelwirkenden Hydraulikzylinder 31 als Betätigungselement der zweite Ausleger 7, unabhängig vom ersten Ausleger 4 um die vertikale Schwenkachse 27 verschwenkt werden kann. Dadurch kann beispielsweise auch der zweite oder letzte Ausleger 7 zusätzlich in eine rückwärtige Transportposition verschwenkt werden.

Aufgrund dieser konstruktiven Ausgestaltung der Anlenkung der Mähwerke 1,1' mit deren integrierten Aufbereitern 2 und aufgrund dieser konstruktiven Ausgestaltung der Anlenkung der Querförderbänder 3,3' an das Tragwerk 5, sind sowohl die Mähwerke 1,1' als auch die Querförderbänder 3,3' um die etwa fahrtrichtungsparallelen Schwenkachsen 8, mittels aus Gründen der Übersichtlichkeit nicht näher dargestellter Schwenkantriebe, von der Arbeitsposition in ihre jeweilige Transportposition hochklappbar, so dass dadurch die zulässige Transportbreite des öffentlichen Verkehrs nicht überschritten wird. Dabei ist es von besonderem Vorteil, wenn jedem Ausleger (4,7) zum Verschwenken um seine horizontale Gelenkachse (8) ein eigener Stellantrieb als Hydraulikzylinder zugeordnet ist, der aus Gründen der Übersichtlichkeit nicht mit dargestellt ist.

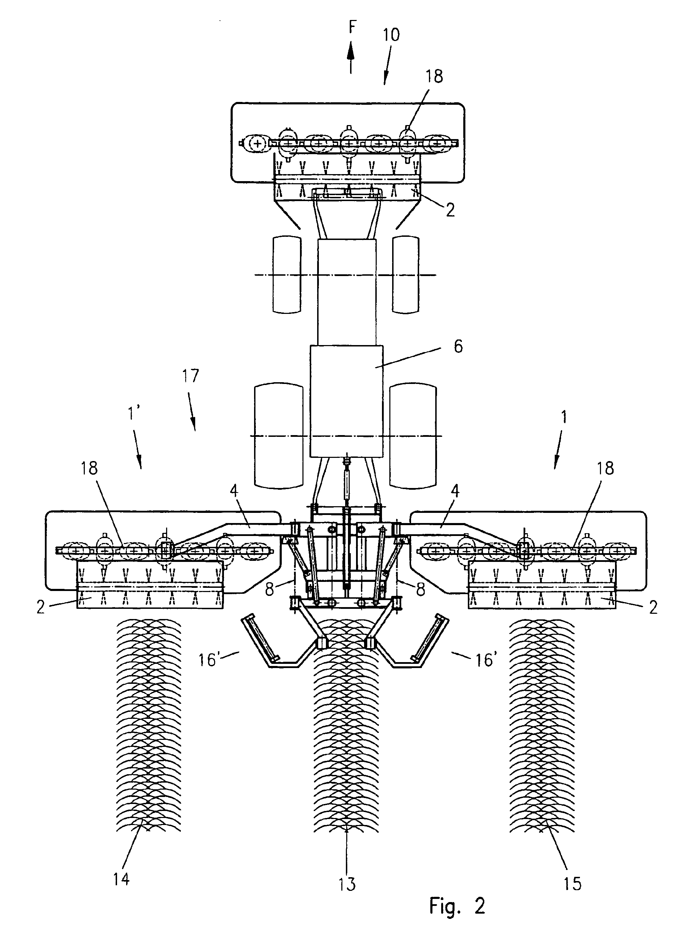

Ein weiterer Vorteil der Erfindung besteht darin, das alternativ auch durch ein Hochschwenken der Förderbänder 3,3' der Querfördereinrichtung 11 diese völlig mit dem Mähprozess außer Eingriff gebracht werden können. Dieses ist dann wünschenswert, wenn nach dem Mähprozess die Einzelschwade auseinander gestreut werden sollen. Dieses ist in der Fig. 2 zum Ausdruck gebracht. In diesem Fall werden drei Einzelschwade 13,14,15 gebildet, die dann zueinander beabstandet sind.

Des Weiteren ist die Erfindung so ausgestaltet, dass eine völlige Entkopplung der Querfördereinrichtung 11 von den Seitenmähwerken 1.1' möglich ist. Dazu ist das Tragwerk 5 rückwärtig mit einer Kupplungseinrichtung 38 , beispielsweise mit einer Dreipunktkupplung nach dem Prinzip der Dreipunkthydraulik von Traktoren ausgestattet, wobei die Querfördereinrichtung 11 ebenfalls über entsprechende Kupplungspunkte 39,40,41, verfügt. Diese Kupplungseinrichtung 38 definiert somit eine lösbar kuppelbare Schnittstelle zwischen den Mähwerken 1,1' und einer Querfördereinrichtung 11.

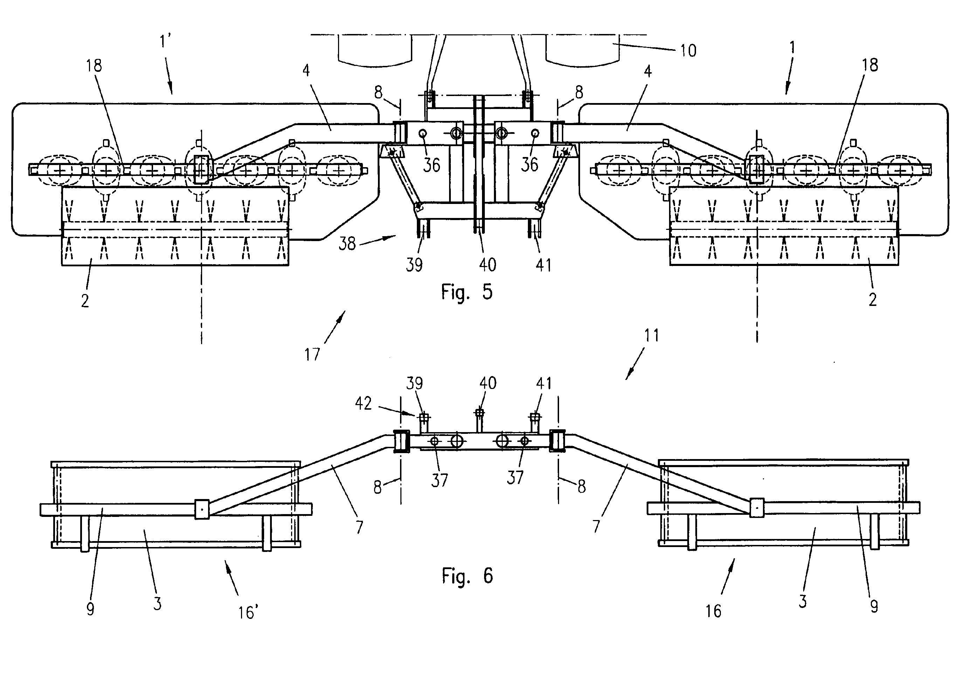

Die Fig. 5 und die Fig. 6 verdeutlichen diesen Zusammenhang. Besonders der Einsatz von Schnellkupplungseinrichtungen, wie beispielsweise ein Kupplungsdreieck, ermöglichen ein schnelles An- bzw. Abkoppeln der Querfördereinrichtung 11.

Dieses beinhaltet den besonderen Vorteil, dass die Querfördereinrichtung 11 für den Fall, dass die Bildung eines Großschwads 12 für den Häckselvorgang zur Silageerzeugung vorgesehen ist, diese mitgeführt werden kann, wohingegen die Querfördereinrichtung 11 für den Fall, dass Einzelschwaden 13,14,15 mit nachfolgendem Streuvorgang vorgesehen ist, diese nicht mitgeführt werden muss. Dieses ermöglicht gerade im letzteren Fall den Einsatz kleinerer Traktore und schont gleichermaßen wegen der geringeren Belastung die Traktore und die Fahrbahndecken, welches insgesamt zu einer wirtschaftlicheren Nutzung eines derartigen Mähwerks beiträgt.

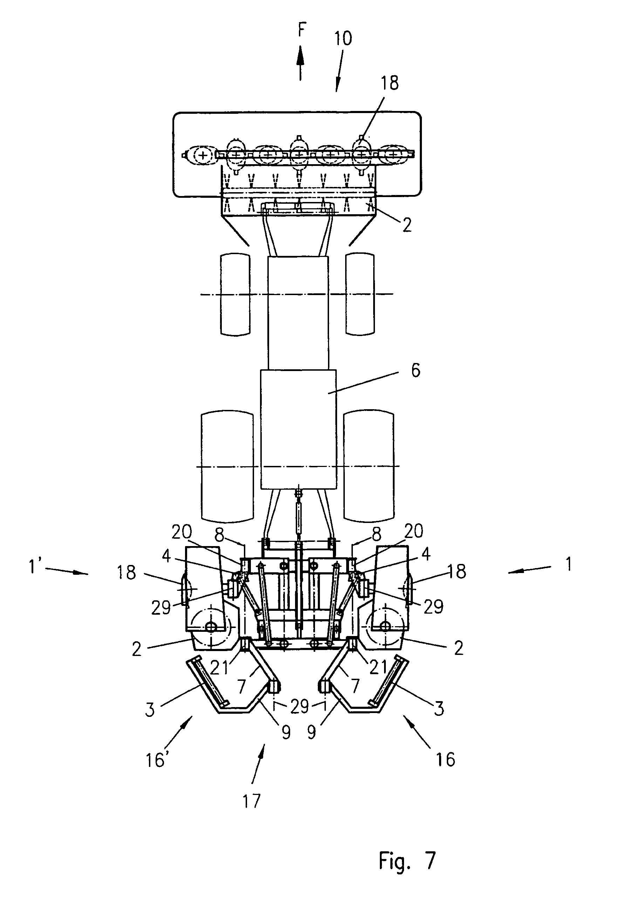

Fig. 7 zeigt in einer Draufsicht die Mähwerkskombination mit hochgeklappten Auslegern 4 und 7 in einer Transportstellung.

Die Erfindung, wie zuvor näher an dem Ausführungsbeispiel dargelegt, bei dem ein Förderband 3 an dem Ausleger angelenkt ist, kann ebenfalls direkt angewandt werden auf einen Aufbereiter, der an einem Ausleger angelenkt ist. Ebenfalls ist auch eine Kombination derart möglich, dass insgesamt drei Ausleger hintereinander angeordnet sind, die ebenfalls in einer fluchtenden horizontalen Schwenkachse 8 an einem Traggestell 5 angelenkt sind. Dabei kann an dem ersten Ausleger das Mähwerk, an dem zweiten Ausleger der Aufbereiter und an dem dritten Ausleger ein Förderband angelenkt sein.

Auch können dabei die verschiedenen Zusatzeinrichtungen, wie Aufbereiter oder Fördereinrichtung durch entsprechende Kupplungseinrichtungen von dem Traggestell abgekoppelt werden oder möglicherweise durch andere austauschbare Einrichtungen ersetzt werden. Dieses setzt jedoch voraus, dass die Kupplungseinrichtung 42 einer Zusatzeinrichtung, beispielsweise die eines Aufbereiters 3, oder die einer Fördereinrichtung 16 oder 16', mit der Kupplungseinrichtung 38 des Tragwerks 5 kompatibel ist.

Die Erfindung ist dabei keineswegs auf an Traktoren anbaubare oder von Traktoren gezogene Mähwerke beschränkt. Sie kann gleichermaßen auch auf Seitenmähwerke selbstfahrender Mähwerke angewendet werden. Dieses gilt gleichermaßen auch für alle Kreiselmähwerkstypen, als auch für Scheiben- und auch für Trommelmähwerke.

### Bezugszeichenliste

- 1,1': Seitenmähwerk
- 2: Aufbereiter
- 3,3': Förderband
- 4: Ausleger
- 5: Tragwerk
- 6: Traktor
- 7: Ausleger
- 8: horizontale Gelenkachse
- 9: Portalrahmen
- 10: Frontmähwerk
- 11: Querfördereinrichtung
- 12: Großschwad
- 13: Einzelschwad
- 14: Einzelschwad
- 15: Einzelschwad
- 16,16': Fördereinrichtung
- 17: Doppelseitenmähwerk
- 18: Mähbalken
- 19: Längsmittelebene
- 20: Gelenkverbindung
- 21: Gelenkverbindung
- 22: Gelenkverbindung
- 23: Gelenkverbindung
- 24: Gelenkverbindungsstück
- 25: Gelenkverbindungsstück
- 26: vertikale Gelenkachse
- 27: vertikale Gelenkachse
- 28: Gelenkverbindung
- 29: Gelenkverbindung
- 30: horizontale Gelenkachse
- 31: Hydraulikzylinder
- 32: Drehmomentenstütze
- 33: Widerlager
- 34: Widerlager
- 35: Koppelstange
- 36: Gelenkpunkt
- 37: Gelenkpunkt
- 38: Kupplungseinrichtung
- 39: Kupplungspunkt
- 40: Kupplungspunkt
- 41: Kupplungspunkt

## Patentansprüche

1. Seitenmähwerk (1, 1') mit einem Tragwerk (5) zum Anbau an Traktoren oder als Teil selbstfahrender Mähwerke, mit um lotrechte Achsen angetriebene, mit Mähklingen besetzte Mähwerkzeuge, und mit einem dem Seitenmähwerk nachgeschalteten Aufbereiter (2), wobei das Seitenmähwerk (1) und der Aufbereiter (2) eine Baueinheit bilden, die an einem ersten Ausleger (4) in einer Gelenkverbindung (28) mit um eine überwiegend in Fahrtrichtung (F) ausgerichtete horizontale Gelenkachse (30) befestigt ist, und wobei der Ausleger (4) mit dem Tragwerk (5) in einer Gelenkverbindung (20) mit um eine überwiegend in Fahrtrichtung (F) ausgerichtete horizontale Gelenkachse (8) vertikal verschwenkbar verbunden ist, und mit einer rückwärtig hinter dem Aufbereiter (2) angeordneten Fördereinrichtung (3) zum Aufnehmen und seitlichen Versetzen und Ablegen von Mahd, wobei die Fördereinrichtung (3) an einem zweiten Ausleger (7) befestigt ist und dieser um eine Gelenkverbindung (21) verschwenkbar direkt oder indirekt mit dem Tragwerk (5) verbunden ist, **dadurch gekennzeichnet, dass** die Gelenkverbindungen (20, 21) mit dem Tragwerk auf einer gemeinsamen Gelenkachse (8) liegen und dass beide, der erste Ausleger (4) und der zweite Ausleger (7), um die Gelenkachse (8) von einer etwa vertikalen Transportposition in eine etwa horizontale Arbeitsposition und umgekehrt verschwenkbar sind.

2. Seitenmähwerk (1) nach Anspruch 1, **dadurch gekennzeichnet, dass** wenigstens einer der zwei Ausleger (4 und 7) eines Seitenmähwerks (1 oder 1') mittels eines Gelenkverbindungsstücks (24,25) mit einem Tragwerk (5) verbunden ist.

3. Seitenmähwerk (1) nach Anspruch 2, **dadurch gekennzeichnet, dass** das Gelenkverbindungsstück (24,25) tragwerksseitig eine Gelenkverbindung (22,23) mit vertikaler Schwenkachse (26,27) und mähwerksseitig eine Gelenkverbindung (20, 21) mit überwiegend in Fahrtrichtung (F) ausgerichteter horizontaler Schwenkachse (8) aufweist.

4. Seitenmähwerk (1) nach einem der Ansprüche 1 bis 3, **dadurch gekennzeichnet, dass** wenigstens einer der wenigstens zwei Ausleger (4 und 7) durch eine Drehmomentenstütze (32) gegenüber dem Tragwerk (5) abgestützt wird.

5. Seitenmähwerk (1) nach Anspruch 4, **dadurch gekennzeichnet, dass** die Drehmomentenstütze (32) eine Überlastsicherung als Anfahrsicherung beinhaltet.

6. Seitenmähwerk (1) nach einem der Ansprüche 1 bis 5, **dadurch gekennzeichnet, dass** zwischen den wenigstens zwei Auslegern (4) und (7) eine Lenkerkopplung derart existiert, dass beim Verschwenken eines der wenigstens zwei Ausleger (4 und 7) um seine vertikale Gelenkachse (26 oder 27) wenigstens ein zweiter Ausleger um seine vertikale Gelenkachse (26 oder 27) ebenfalls eine Schwenkbewegung ausführt.

7. Seitenmähwerk (1) nach Anspruch 6, **dadurch gekennzeichnet, dass** die Koppel der Lenkerkopplung eine Koppelstange (35) umfasst.

8. Seitenmähwerk (1) nach Anspruch 6, **dadurch gekennzeichnet, dass** die Koppel der Lenkerkopplung einen doppeltwirkenden Hydraulikzylinder (31) umfasst.

9. Seitenmähwerk (1) nach einem der Ansprüche 1 bis 8, **dadurch gekennzeichnet, dass** das Seitenmähwerk eine Sicherungseinrichtung als Anfahrsicherung aufweist, derart, dass beim Ansprechen dieser, das Seitenmähwerk (1, 1') um einen Schwenkwinkel (α) ausweichen kann.

10. Seitenmähwerk (1) nach einem der Ansprüche 1 bis 8, **dadurch gekennzeichnet, dass** der wenigstens zweite Ausleger (7) im Falle des Ansprechens der Anfahrsicherung um einen Schwenkwinkel (β) ausweichen kann.

11. Seitenmähwerk (1) nach Anspruch 10, **dadurch gekennzeichnet, dass** der Betrag des Schwenkwinkels (β) während des Schwenkvorgangs zwangsläufig schneller als der Betrag des Schwenkwinkels (α) ansteigt.

12. Seitenmähwerk (1) nach einem der Ansprüche 1 bis 11, **dadurch gekennzeichnet, dass** ein Ausleger (7) und ein Förderband (3) eine an ein Tragwerk (5) anlenkbare Zusatzeinrichtung bilden.

13. Seitenmähwerk (1) nach einem der Ansprüche 1 bis 11, **dadurch gekennzeichnet, dass** ein Ausleger (7) und ein Aufbereiter (2) eine an ein Tragwerk (5) anlenkbare Zusatzeinrichtung bilden.

14. Seitenmähwerk nach einem der Ansprüche 3 bis 13, **dadurch gekennzeichnet, dass** die Schwenkachse (30) der Gelenkverbindung (28, 29) der Baueinheit Seitenmähwerk und Aufbereiter sowie der Fördereinrichtung mit den zwei Auslegern (4, 7) in der Arbeitsposition identisch sind und somit auf einer gemeinsamen Geraden liegen.

15. Seitenmähwerk (1) nach einem der Ansprüche 12 bis 14, **dadurch gekennzeichnet, dass** ein Seitenmähwerk (1 ,1') und die jeweils zugeordnete Zusatzeinrichtung, beispielsweise ein Aufbereiter (3) oder eine Fördereinrichtung (16, 16') um die jeweiligen Gelenkverbindungen (20, 21) von einer Arbeitsstellung in eine Transportstellung und umgekehrt verschwenkt werden können.

16. Seitenmähwerk (1) nach einem der Ansprüche 1 bis 15, **dadurch gekennzeichnet, dass** jedem der wenigstens zwei Ausleger (4 und 7) zum Verschwenken um seine horizontale Gelenkachse (8) ein eigener und separat ansteuerbarer Stellantrieb, beispielsweise ausgeführt als Hydraulikzylinder, zugeordnet ist

17. Seitenmähwerk (1) nach einem der Ansprüche 1 bis 16, **dadurch gekennzeichnet, dass** das Tragwerk (5) mindestens eines Seitenmähwerkes (1, 1') eine Kupplungseinrichtung (38) zur lösbaren An- an. Abkopplung einer Zusatzeinrichtung, beispielsweise die eines Aufbereiters (3) oder einer Fördereinrichtung (16, 16') aufweist.

18. Seitenmähwerk (1) nach Anspruch 17, **dadurch gekennzeichnet, dass** die Zusatzeinrichtung, beispielsweise die eines Aufbereiters (3) oder einer Fördereinrichtung (16, 16') zum Anbau an das Tragwerk (5) eine Kupplungseinrichtung (42) aufweist, die mit der Kupplungseinrichtung (38) kompatibel ist.

19. Seitenmähwerk (1) nach einem der Ansprüche 1 bis 18, **dadurch gekennzeichnet, dass** der in Fahrtrichtung (F) hinterste und letzte Ausleger der wenigstens zwei Ausleger (4, 7) um seine lotrechte Achse (23) soweit verschwenkbar ist, dass die an diesem letzten Ausleger angelenkte Zusatzeinrichtung, beispielsweise die eines Aufbereiters (3) oder einer Fördereinrichtung (16, 16'), neben der hochgeklappten Ausrichtung eine rückwärtig weisende Ausrichtung aufweist.

20. Seitenmähwerk (1) nach Anspruch 19, **dadurch gekennzeichnet, dass** der Schwenkvorgang zur Herbeiführung der rückwärtigen Ausrichtung um die Schwenkachse (23) des Hydraulikzylinders (31) betätigt wird.

## Claims

1. A lateral mowing mechanism (1, 1') comprising a support arrangement (5) for mounting to tractors or as part of self-propelled mowing mechanisms, mowing tools driven about perpendicular axes and fitted with mowing blades, and a conditioner (2) connected downstream of the lateral mowing mechanism, wherein the lateral mowing mechanism (1) and the conditioner (2) form a structural unit fixed on a first arm (4) at a pivot connection (28) with a horizontal pivot axis (30) directed predominantly in the travel direction (F), and wherein the arm (4) is vertically pivotably connected to the support arrangement (5) at a pivot connection (20) with a horizontal pivot axis (8) directed predominantly in the travel direction (F), and comprising a conveyor device (3) arranged rearwardly behind the conditioner (2) for picking up and laterally displacing and depositing mown material, wherein the conveyor device (3) is fixed to a second arm (7) and same is connected directly or indirectly to the support arrangement (5) pivotably about a pivot connection (21), **characterised in that** the pivot connections (20, 21) to the support arrangement are disposed on a common pivot axis (8) and that both, the first arm (4) and the second arm (7), are pivotable about the pivot axis (8) from a substantially vertical transport position into a substantially horizontal working position and vice-versa.

2. A lateral mowing mechanism (1) according to claim 1 **characterised in that** at least one of the two arms (4 and 7) of a lateral mowing mechanism (1 or 1') is connected to a support arrangement (5) by means of a pivot connecting portion (24, 25).

3. A lateral mowing mechanism (1) according to claim 2 **characterised in that** the pivot connecting portion (24, 25) has at the support arrangement side a pivot connection (22, 23) with a vertical pivot axis (26, 27) and at the mowing mechanism side a pivot connection (20, 21) with a horizontal pivot axis (8) directed predominantly in the travel direction (F).

4. A lateral mowing mechanism (1) according to claims 1 to 3 **characterised in that** at least one of the at least two arms (4 and 7) is supported with respect to the support arrangement (5) by way of a torque support (32).

5. A lateral mowing mechanism (1) according to claim 4 **characterised in that** the torque support (32) includes an overload safety device in the form of an anti-collision safety device.

6. A lateral mowing mechanism (1) according to claims 1 to 5 **characterised in that** a steering coupling exists between the at least two arms (4 and 7) such that upon pivotal movement of one of the at least two arms (4 and 7) about its vertical pivot axis (26 or 27) at least one second arm also performs a pivotal movement about its vertical pivot axis (26 or 27).

7. A lateral mowing mechanism (1) according to claim 6 **characterised in that** the coupling member of the steering coupling includes a coupling bar (35).

8. A lateral mowing mechanism (1) according to claim 6 **characterised in that** the coupling member of the steering coupling includes a double-acting hydraulic cylinder (31).

9. A lateral mowing mechanism (1) according to claims 1 to 8 **characterised in that** the lateral mowing mechanism has a safety device in the form of an anti-collision safety device such that upon response of the latter the lateral mowing mechanism (1, 1') can deflect through a pivotal angle (α).

10. A lateral mowing mechanism (1) according to claims 1 to 8 **characterised in that** the at least second arm (7) can deflect through a pivotal angle (β) in the case of response on the part of the anti-collision safety device.

11. A lateral mowing mechanism (1) according to claim 10 **characterised in that** the magnitude of the pivotal angle (P) rises inevitably faster than the magnitude of the pivotal angle (α) during the pivoting movement.

12. A lateral mowing mechanism (1) according to claims 1 to 11 **characterised in that** an arm (7) and a conveyor belt (3) form an additional device which can be pivotably connected to a support arrangement (5).

13. A lateral mowing mechanism (1) according to claims 1 to 11 **characterised in that** an arm (7) and a conditioner (2) form an additional device which can be pivotably connected to a support arrangement (5).

14. A lateral mowing mechanism according to claims 3 to 13 **characterised in that** the pivot axis (30) of the pivot connection (28, 29) of the structural unit of the lateral mowing mechanism and the conditioner and of the conveyor device are identical to the two arms (4, 7) in the working position and thus lie on a common straight line.

15. A lateral mowing mechanism (1) according to claims 12 to 14 **characterised in that** a lateral mowing mechanism (1, 1') and the respectively associated additional device, for example a conditioner (3) or a conveyor device (16, 16') can be pivoted about the respective pivot connections (20, 21) from a working position into a transport position and vice-versa.

16. A lateral mowing mechanism (1) according to claims 1 to 15 **characterised in that** associated with each of the at least two arms (4 and 7) for pivotal movement about its horizontal pivot axis (8) is a specific and separately actuable adjusting drive, for example in the form of a hydraulic cylinder.

17. A lateral mowing mechanism (1) according to claims 1 to 16 **characterised in that** the support arrangement (5) of at least one lateral mowing mechanism (1, 1') has a coupling device (38) for releasably coupling and uncoupling an additional device, for example that of a conditioner (3) or a conveyor device (16, 16').

18. A lateral mowing mechanism (1) according to claim 17 **characterised in that** the additional device, for example that of a conditioner (3) or a conveyor device (16, 16'), for mounting to the support arrangement (5), has a coupling device (42) compatible with the coupling device (48).

19. A lateral mowing mechanism (1) according to claims 1 to 18 **characterised in that** the arm of the at least two arms (4, 7), that is last and rearmost in the travel direction (7), is pivotable about its perpendicular axis (23) to such an extent that the additional device pivotably mounted to said last arm, for example that of a conditioner (3) or a conveyor device (16, 16'), has a rearwardly facing orientation besides the upwardly pivoted orientation.

20. A lateral mowing mechanism (1) according to claim 19 **characterised in that** the pivotal movement for producing the rearward orientation is actuated about the pivot axis (23) of the hydraulic cylinder (31).

## Revendications

1. Faucheuse latérale (1, 1') comprenant une structure de support (5) et destinée à être montée sur des tracteurs ou à faire partie de faucheuses automotrices, comprenant des outils de coupe équipés de lames de coupe et entraînés autour d'axes verticaux, et comprenant un conditionneur (2) monté en aval de la faucheuse latérale, la faucheuse latérale (1) et le conditionneur (2) formant un ensemble qui est fixé à un premier bras (4), par une articulation (28) avec un axe d'articulation (30) horizontal orienté sensiblement dans le sens de la marche (F), et le bras (4) étant relié avec possibilité de pivotement vertical à la structure de support (5), par une articulation (20) avec un axe d'articulation (8) horizontal orienté sensiblement dans le sens de la marche (F), et comprenant un convoyeur (3) disposé à l'arrière du conditionneur (2) et destiné au ramassage, au transfert latéral et au dépôt de la récolte, le convoyeur (3) étant fixé à un deuxième bras (7) et celui-ci étant relié directement ou indirectement à la structure de support (5), avec possibilité de pivotement autour d'une articulation (21), **caractérisée par le fait que** les articulations (20, 21) sont disposées sur un axe d'articulation (8) commun avec la structure de support et **par le fait que** le premier bras (4) et le deuxième bras (7) peuvent être pivotés tous deux autour de l'axe d'articulation (8) pour passer d'une position de transport verticale à une position de travail à peu près horizontale et inversement.

2. Faucheuse latérale (1) selon la revendication 1, **caractérisée par le fait qu'**au moins un des deux bras (4 et 7) d'une faucheuse latérale (1 ou 1') est relié au moyen d'un élément d'articulation (24, 25) à une structure de support (5).

3. Faucheuse latérale (1) selon la revendication 2, **caractérisée par le fait que** l'élément d'articulation (24, 25) présente, côté structure de support, une articulation (22, 23) à axe de pivotement (26, 27) vertical et, côté faucheuse, une articulation (20, 21) à axe de pivotement (8) horizontal, orienté sensiblement dans le sens de la marche (F).

4. Faucheuse latérale (1) selon l'une quelconque des revendications 1 à 3, **caractérisée par le fait qu'**au moins un des au moins deux bras (4 et 7) est soutenu vis-à-vis de la structure de support (5) par une jambe de force de couple (32).

5. Faucheuse latérale (1) selon la revendication 4, **caractérisée par le fait que** la jambe de force de couple (32) comprend un dispositif de protection contre les surcharges en tant que dispositif anticollision.

6. Faucheuse latérale (1) selon l'une quelconque des revendications 1 à 5, **caractérisée par le fait qu'**il existe entre les bras (4) et (7), au nombre d'au moins deux, un mécanisme de bielle agissant de manière telle que lors du pivotement de l'un des bras (4 et 7), au nombre d'au moins deux, autour de son axe d'articulation (26 ou 27) vertical, au moins un deuxième bras exécute également un pivotement autour de son axe d'articulation (26 ou 27) vertical.

7. Faucheuse latérale (1) selon la revendication 6, **caractérisée par le fait que** le moyen d'accouplement du mécanisme de bielle comprend une biellette (35).

8. Faucheuse latérale (1) selon la revendication 6, **caractérisée par le fait que** le moyen d'accouplement du mécanisme de bielle comprend un vérin hydraulique à double effet (31).

9. Faucheuse latérale (1) selon l'une quelconque des revendications 1 à 8, **caractérisée par le fait que** la faucheuse latérale présente un dispositif de sécurité en tant que dispositif anticollision, de telle sorte que lors du déclenchement dudit dispositif, la faucheuse latérale (1, 1') puisse dévier avec un angle de pivotement (α).

10. Faucheuse latérale (1) selon l'une quelconque des revendications 1 à 8, **caractérisée par le fait que**, en cas de déclenchement du dispositif anticollision, le deuxième bras (7), au nombre d'au moins un, peut dévier avec un angle de pivotement (β).

11. Faucheuse latérale (1) selon la revendication 10, **caractérisée par le fait que** pendant le processus de pivotement, la valeur de l'angle de pivotement (β) augmente obligatoirement plus rapidement que la valeur de l'angle de pivotement (α).

12. Faucheuse latérale (1) selon l'une quelconque des revendications 1 à 11, **caractérisée par le fait qu'**un bras (7) et une bande transporteuse (3) constituent un dispositif auxiliaire pouvant être articulé sur une structure de support (5).

13. Faucheuse latérale (1) selon l'une quelconque des revendications 1 à 11, **caractérisée par le fait qu'**un bras (7) et un conditionneur (2) constituent un dispositif auxiliaire pouvant être articulé sur une structure de support (5).

14. Faucheuse latérale (1) selon l'une quelconque des revendications 3 à 13, **caractérisée par le fait que** les axes de pivotement (30) de l'articulation (28, 29) de l'ensemble formé par la faucheuse latérale et le conditionneur, ainsi que du convoyeur sont identiques aux deux bras (4, 7) dans la position de travail et se situent par conséquent sur une droite commune.

15. Faucheuse latérale (1) selon l'une quelconque des revendications 12 à 14, **caractérisée par le fait qu'**une faucheuse latérale (1, 1') et le dispositif auxiliaire respectif associé, par exemple un conditionneur (3) ou un convoyeur (16, 16'), peuvent être pivotés autour des articulations (20, 21) respectives pour passer d'une position de travail dans une position de transport et inversement.

16. Faucheuse latérale (1) selon l'une quelconque des revendications 1 à 15, **caractérisée par le fait que** pour le pivotement autour de son axe (8) horizontal, on associe à chacun des bras (4 et 7), au nombre d'au moins deux, un mécanisme de manoeuvre distinct, pouvant être activé séparément et réalisé par exemple sous forme de vérin hydraulique.

17. Faucheuse latérale (1) selon l'une quelconque des revendications 1 à 16, **caractérisée par le fait que** la structure de support (5) d'au moins une faucheuse (1, 1') présente un dispositif d'accouplement (38) pour l'accouplement et le désaccouplement séparable d'un dispositif auxiliaire, par exemple d'un conditionneur (3) ou d'un convoyeur (16, 16').

18. Faucheuse latérale (1) selon la revendication 17, **caractérisée par le fait que** pour le montage sur la structure de support (5), le dispositif auxiliaire, par exemple un conditionneur (3) ou un convoyeur (16, 16'), présente un dispositif d'accouplement (42) qui est compatible avec le dispositif d'accouplement (38).

19. Faucheuse latérale (1) selon l'une quelconque des revendications 1 à 18, **caractérisée par le fait que** le dernier des bras (4, 7), au nombre d'au moins deux, qui est situé à l'arrière, vu dans le sens de la marche (F), peut être pivoté autour de son axe (23) vertical de façon telle que le dispositif auxiliaire, par exemple un conditionneur (3) ou un convoyeur (16, 16'), articulé sur ce dernier bras, présente, outre l'orientation relevée, une orientation dirigée vers l'arrière.

20. Faucheuse latérale (1) selon la revendication 19, **caractérisée par le fait que** le processus de pivotement pour provoquer l'orientation vers l'arrière est exécuté autour de l'axe de pivotement (23) du vérin hydraulique (31).
